**Europäisches Patentamt**

(19) **European Patent Office**

**Office européen des brevets**

(11) Veröffentlichungsnummer: **0 014 442**
**B1**

(12) # EUROPÄISCHE PATENTSCHRIFT

(45) Veröffentlichungstag der Patentschrift:
**21.04.82**

(51) Int. Cl.³: **C 08 L 23/02**, C 08 L 83/04

(21) Anmeldenummer: **80100501.8**

(22) Anmeldetag: **01.02.80**

(54) **Homogene, thermoplastische Mischungen aus Propylen-Ethylen-Copolymerisaten und flüssigen, gesättigten Diorganopolysiloxanen eines bestimmten Viskositätsbereiches.**

(30) Priorität: **13.02.79 DE 2905356**

(43) Veröffentlichungstag der Anmeldung:
**20.08.80 Patentblatt 80/17**

(45) Bekanntmachung des Hinweises auf die Patenterteilung:
**21.04.82 Patentblatt 82/16**

(84) Benannte Vertragsstaaten:
**DE FR GB IT**

(56) Entgegenhaltungen:
**US-A-3 956 420**

(73) Patentinhaber: **BAYER AG, Zentralbereich Patente, Marken und Lizenzen, D-5090 Leverkusen 1, Bayerwerk (DE)**

(72) Erfinder: **Grigo, Ulrich, Dr., Steinstrasse 161, D-4150 Krefeld (DE)**
Erfinder: **Morbitzer, Leo, Dr., Rungestrasse 50, D-5000 Köln 80 (DE)**
Erfinder: **Arlt, Klaus-Peter, Dr., Anton-Aulke-Ring 9, D-4401 Senden/Münster (DE)**
Erfinder: **Binsack, Rudolf, Dr., Bethelstrasse 4a, D-4150 Krefeld (DE)**
Erfinder: **Merten, Josef, Dr., An der Blankstrasse 33a, D-4052 Korschenbroich 1 (DE)**

0 014 442

Homogene, thermoplastische Mischungen aus Propylen-Ethylen-Copolymerisaten
und flüssigen, gesättigten Diorganopolysiloxanen eines bestimmten Viskositätsbereiches

Die Erfindung betrifft homogene, thermoplastische Mischungen aus Propylen-Ethylen-Copolymerisaten mit 0,5 bis zu 15 Gew.-% an in das Copolymerisat eingebauten Einheiten von Ethylen und flüssigen, gesättigten Diorganopolysiloxanen mit einer Viskosität von 30 000 bis 80 000 $\frac{mm^2}{s}$ bei 20° C.

Aus der BE-PS 648 526 (US-PS 3 326 880) ist es bekannt, vorwiegend kristalline Homo- oder Copolymerisate aus monoolefinisch ungesättigten Kohlenwasserstoffen mit 2 bis 4 Kohlenstoffatomen, insbesondere Propylen, mit 0,01 bis 5 Gew.-%, bezogen auf Mischungen, an Alkalimetallsalzen von verzweigten acyclischen, gesättigten Monocarbonsäuren mit maximal 12 C-Atomen abzumischen. Zur weiteren Verstärkung der mechanischen Eigenschaften können in die Schmelze der vorgenannten Mischungen bis zu 20 Gew.-%, bezogen auf Gesamtmischung, an kautschukähnlichen Substanzen, z. B. Siliconkautschuke eingearbeitet werden. Derartige gesättigte Siliconkautschuke haben Molgewichte von etwa 200 000−2 000 000 (vgl. DE-AS 1 669 851, Spalte 4, Zeiten 1−8). Handelsübliche Siliconkautschuke basieren nach »Chemie und Technologie der Silicone von W. Noll, 1968, Verlag Chemie, GmbH, Weinheim/Bergstraße, Seite 332, Kapitel Siliconkautschuk-Typen« vornehmlich auf kettenpolymeren Dimethylpolysiloxanen mit Molekulargewichten von etwa 300 000 bis 700 000.

Weiter ist es aus der DE-AS 2 430 949 u. a. bekannt, vernetzbare Mischungen aus Polypropylen oder Copolymerisaten aus Propylen und geringen Mengen anderer vinylischer Monomerer und Vinyl- oder Allylgruppen enthaltendem Diorganopolysiloxangummi mit einer Williams-Plastizität von über 0,0508 cm (gemäß ASTM-D-926-67) herzustellen.

Schließlich ist bereits vorgeschlagen worden, niedermolekulare, flüssige Diorganopolysiloxane mit Viskositäten bis zu 3000 $\frac{mm^2}{s}$ bei 25° C und Ethylen-Propylen-Copolymerisate abzumischen, wobei die Mischungen mit Diorganopolysiloxanen, die eine Viskosität bis zu 100 $\frac{mm^2}{s}$ bei 25° C besitzen, nach Extrusion und Vernetzung mit Peroxiden Formkörper ergeben, die einen hohen Ionisationswiderstand aufweisen.

Es wurde nun überraschend gefunden, daß flüssige, gesättigte Diorganopolysiloxane des Viskositätsbereiches 30 000 bis 80 000 $\frac{mm^2}{s}$ bei 20° C schon in untergeordneten Mengen einen nachhaltigen Einfluß auf die mechanischen Eigenschaften von Propylen-Ethylen-Copolymerisaten ausüben. So wird das elastische Verhalten von Formkörpern aus Mischungen von Propylen-Ethylen-Copolymerisaten und geringen Diorganopolysiloxananteilen des angegebenen Viskositätsbereiches deutlich verbessert, während Wärmeformbeständigkeit und Steifigkeit weitgehend erhalten bleiben.

Mit steigenden Mengen an Diorganopolysiloxan im Bereich von 0,5−15 Gew.-% nimmt die bleibende Dehnung ein Maß für die Elastizität, der Formkörper merklich ab. Als besonders günstig haben sich Diorganopolysiloxan-Zusätze von 1−10 Gew.-% herausgestellt.

Ein weiterer Vorteil der aus erfindungsgemäßen Mischungen hergestellten Formkörper aus Propylen-Ethylen-Copolymerisaten und Diorganopolysiloxanen ist die verbesserte Reißdehnung. Obwohl die eingemischten oligomeren Diorganosiloxane einen Stockpunkt < −40° C aufweisen, wird die Wärmeformbeständigkeit, ausgedrückt als Vicat-Temperatur, von Formkörpern aus erfindungsgemäßen Mischungen nur geringfügig erniedrigt.

Um die vorstehend genannten Eigenschaftsverbesserungen zu erzielen, ist es wichtig, Diorganopolysiloxane des Viskositätsbereiches 30 000 bis 80 000 $\frac{mm^2}{s}$, gemessen bei 20° C, einzusetzen. Diorganopolysiloxane mit geringeren Viskositäten als 30 000 $\frac{mm^2}{s}$ sind weniger gut geeignet, da sie bei der Verarbeitung leicht ausschwitzen können. Andererseits sind auch hochviskose Diorganopolysiloxane mit Viskositäten > 80 000 $\frac{mm^2}{s}$ weniger gut geeignet, da möglicherweise ihre Diffusionsgeschwindigkeit nicht groß genug ist, um sich innerhalb des polymeren Werkstückes während einer mechanischen Beanspruchung − z. B. einer Dehnung − schnell genug zu verteilen.

Gegenstand der Erfindung sind somit homogene thermoplastische Mischungen aus

A) 85−99,5 Gew.-%, vorzugsweise 90−99 Gew.-%, Propylen-Ethylen-Copolymerisat mit 0,5−15 Gew.-%, vorzugsweise 1−8 Gew.-%, copolymerisierten Ethyleneinheiten und mit einem Schmelzindex von 1,0 bis 30 g/10 min bei 230° C und einer Belastung von 5 kg und

2

B) 0,5 – 15 Gew.-%, vorzugsweise 1 – 10 Gew.-%, flüssigen, gesättigten Diorganopolysiloxanen mit einer Viskosität von 30 000 bis 80 000 $\frac{mm^2}{s}$ bei 20° C.

Als Diorganopolysiloxane kommen Dialkylpolysiloxane mit 1 bis 4 C-Atomen in den Alkylgruppen, Diphenylpolysiloxane und Methyl-phenylpolysiloxane im angegebenen Viskositätsbereich in Frage.

Besonders wirksam sind die genannten Dialkylpolysiloxane, insbesondere Dimethylpolysiloxane.

Die in den Mischungen enthaltenen Propylen-Ethylen-Copolymerisate haben einen Schmelzindex (MFI) von 1,0 – 30 g/10 min bei 230° C und einer Belastung von 5 kg. Der copolymerisierte Anteil an Ethylen beträgt 0,5 bis 15 Gew.-%, vorzugsweise 1,0 bis 8 Gew.-%. Im allgemeinen wird der Kristallinitätsgrad von Polypropylen durch Copolymerisation mit Monomeren wie Ethylen herabgesetzt. Gleichzeitig wird jedoch meistens eine Verbesserung des elastischen, besonders des Zähigkeitsverhaltens im Vergleich zum Homo-Polypropylen beobachtet, wobei jedoch die Struktur des Copolymerisats eine wichtige Rolle spielt. So weisen Polypropylen-Copolymerisate, in denen kristalline Ethylen-Segmente vorliegen, eine geringere Zähigkeits-Verbesserung auf als in den erfindungsgemäßen Mischungen enthaltene, vorwiegend kristalline Propylen-Ethylen-Copolymerisate, in denen amorphe, kautschukartige Ethylen/Propylen-Segmente mit statistischer Verteilung von Ethylen und Propylen vorhanden sind.

Erfindungsgemäß einzusetzende Propylen-Ethylen-Copolymerisate können in bekannter Weise (vgl. DE-OS 2 742 910) nach dem Ziegler-Natta-Verfahren unter Verwendung bekannter Katalysatorsysteme, z. B. Titan-III-chlorid/Triethylaluminium bzw. Diethylaluminiumchlorid wie folgt hergestellt werden:

Die Polymerisation beginnt mit der Homopolymerisation von Propylen, wobei ein kristalliner Polypropylenblock entsteht. Nach der vorliegenden Erfindung werden Propylen-Ethylen-Copolymerisate bevorzugt, die dadurch hergestellt werden, daß nach der Bildung des Polypropylenblocks zusammen mit dem Ethylen auch Propylen beigegeben wird, so daß amorphe, kautschukartige Ethylen/Propylen-Segmente mit einer weitgehend statistischen Verteilung von Ethylen und Propylen entstehen.

Werden nun erfindungsgemäß einzusetzende Propylen-Ethylen-Copolymerisate mit 0,5 bis 15 Gew.-%, vorzugsweise 1 bis 10 Gew.-%, Diorganopolysiloxanen abgemischt, so tritt schon bei geringen Diorganopolysiloxan-Zusätzen des Viskositätsbereiches 30 000 bis 80 000 $\frac{mm^2}{s}$ bei 20° C eine deutliche Verbesserung der elastischen Eigenschaften, speziell der bleibenden Dehnung und der Reißdehnung, auf.

Der angegebene Viskositätsbereich entspricht mittleren Molekulargewichten $\overline{M}_w$ (Gewichtsmittel) von etwa 65 000 bis 100 000.

Für die erfindungsgemäß geeigneten Polyorganosiloxane wurden die mittleren Molekulargewichte nach der Barry'schen Beziehung (vgl. W. Noll, »Chemie und Technologie der Silikone«, 1968, Verlag Chemie GmbH, Weinheim/Bergstraße, S. 218/219, Kap. Kettenpolymere) aus den Eigenviskositäten der Öle ermittelt.

Um den elastifizierenden Effekt der Diorganopolysiloxane in Propylen-Ethylen-Copolymerisaten optimal auszunutzen, müssen die Diorganopolysiloxane möglichst homogen in das Copolymerisat eingearbeitet werden. Dieses Einarbeiten in das Copolymerisat kann entweder bei Raumtemperatur und anschließendem Erwärmen des Gemisches unter Einwirkung von Scherkräften oder direkt während des Aufschmelzens des Copolymerisats erfolgen. Die Mischungstemperatur muß jedoch hoch genug sein, um den Kunststoff zu erweichen und ein möglichst gleichmäßiges Gemisch zu bilden. Sie beträgt bei einer Verarbeitung im Kneter bzw. Extruder im allgemeinen 170 – 270° C. Dem Gemisch können gewünschtenfalls Pigmente, Füllstoffe, Stabilisierungsmittel, Lichtschutzmittel oder andere geeignete oder modifizierende Ingredenzien einverleibt werden.

Ob das Diorganopolysiloxan homogen im Propylen-Ethylen-Copolymerisat verteilt ist, kann durch elektronenmikroskopische Aufnahmen vom Querschnitt eines Probekörpers ermittelt werden.

Die erfindungsgemäßen Mischungen zeigen gegenüber dem reinen Propylen-Ethylen-Copolymerisat eine ausgeprägte Verbesserung der elastischen Eigenschaften, wie bleibende Dehnung und Reißdehnung. Die erfindungsgemäßen Mischungen eröffnen demnach einen Weg, in der Hitze geformte Artikel mit hohen Polyolefin-Anteilen, d. h. hoher Wärmeformbeständigkeit und verbesserter Elastizität herzustellen. Werden Diorganopolysiloxane außerhalb des beanspruchten Viskositätsbereiches eingesetzt, so werden wesentlich schlechtere mechanische Eigenschaften der Probekörper beobachtet.

## Beispiele 1 – 4 und Vergleichsbeispiel 1

Das in den Beispielen 1 – 4 bzw. im Vergleichsbeispiel 1 verwendete pulverförmige Propylen-Ethylen-Copolymerisat (PE-Copolymerisat) hatte einen Gehalt an einpolymerisiertem Ethylen von 3 Gew.-% und einen Schmelzindex (MFI) von 15,0 g/10 min bei 230°C und 5 kg Belastung. Bei Torsionsmodulmessungen an diesem Polypropylen-Copolymerisat nach DIN 53 445 wies der dynamische Verlustmodul ein Maximum bei −54°C (Einfriertemperatur der amorphen, kautschukartigen Ethylen-Propylen/Segmente) und eines bei +4°C (Einfriertemperatur der amorphen Polypropylen-Anteile).

Das eingesetzte Dimethylpolysiloxan hatte eine Viskosität von 50 000 $\frac{mm^2}{s}$ bei Raumtemperatur und einen Stockpunkt von ca. −50°C.

Das Dimethylpolysiloxan wurde vor dem eigentlichen Vermischen gut mit dem Pulver verrührt. Diese Mischung wurde in einen auf 170°C vorgeheizten 1-l-Innenkneter, Typ GK 4 SU der Fa. Werner + Pfleiderer, Stuttgart, gefüllt und 7 min lang bei einer Drehzahl von 100 UpM und einem Stempeldruck von 2,5 bar Überdruck intensiv geknetet. Hierbei stieg die Massetemperatur auf 200−210°C. Das Knetprodukt wurde auf einer Walze (Walzentemperatur ca. 150°C) zum Fell ausgewalzt und anschließend granuliert.

Die Herstellung der Prüfkörper nach DIN 53 504 (Nr. 3) erfolgte auf einer digital-gesteuerten Spritzgießmaschine (Typ ES 110-60) der Firma Engel KG, Schwertberg, Österreich, bei einer Schneckendrehzahl von 130 UpM, einem Spritzdruck von 1075 bar und einer Düsentemperatur von 230°C. Zum Teil wurden aus dem Probekörper Nr. 3 jeweils die für die verschiedenen Prüfungen erforderlichen Probekörper mechanisch herausgearbeitet. Die Prüfergebnisse der Beispiele 1−4 und Vergleichsbeispiel 1 sind in der Tabelle 1 zusammengefaßt.

In den Beispielen 1−4 zeigt sich deutlich, daß mit steigenden oligomeren Dimethylsiloxan-Zusätzen elastische Eigenschaften wie bleibende Dehnung und Reißdehnung im Vergleich zum reinen Polypropylen-Copolymerisat stark verbessert werden. Das Fließverhalten (MFI) wird erst bei höheren Dimethyl-Siloxan-Zusätzen stärker beeinflußt (Beispiel 4), während die Wärmeformbeständigkeit (Vicat-Erweichungstemperatur) nur geringfügig durch die Dimethylsiloxane herabgesetzt wird.

Die erfindungsgemäßen Produkte eignen sich also besonders zur Herstellung von elastischen, wärmeformbeständigen Formkörpern.

Tabelle 1

Versuchsergebnisse

| | Maßeinheit | Bsp. 1 | Bsp. 2 | Bsp. 3 | Bsp. 4 | Vergleichs-beispiel 1 |
|---|---|---|---|---|---|---|
| PE-Copolymer | Gew.-Tle. | 99 | 97,5 | 95 | 92,5 | 100 |
| Dimethylpolysiloxan | Gew.-Tle. | 1 | 2,5 | 5 | 7,5 | 0 |
| Schmelzindex[1] (MEI) | g/10 min | 17,2 | 18,1 | 19,5 | 27,4 | 15 |
| Reißdehnung[2] | % | 245 | 310 | 395 | 615 | 170 |
| Vicat-Erweichungs-temperatur[3] | °C | 144 | 144 | 143 | 139 | 145 |
| Bleibende Dehnung[4] | % | 83 | 82 | 80 | 77 | 86 |

[1]) nach DIN 53 735 gemessen
[2]) nach DIN 53 455 gemessen
[3]) nach DIN 53 460 gemessen
[4]) Meßmethode: Dehnung eines Normschulterstabes auf doppelte Länge (= 100% Dehnung) mit einer Geschwindigkeit = 100 mm/min; 1 min lang 100% Dehnung aufrechterhalten; 1 min. nach Entlastung wird die bleibende Dehnung gemessen.

Aus den nachfolgenden Vergleichsbeispielen 2 und 3 geht hervor, daß Mischungen aus PE-Copolymerisat mit 3 Gew.-% einpolymerisiertem Ethylen und Diorganopolysiloxanen, die außerhalb des beanspruchten Viskositätsbereiches liegen, Formkörper mit wesentlich schlechteren mechanischen Eigenschaften ergeben. Siehe Tabelle 2.

0 014 442

Tabelle 2

| | Maßeinheit | Beispiel 3 | Vergleichs-beispiel 2 | Vergleichs-beispiel 3 |
|---|---|---|---|---|
| PE-Copolymer | Gew.-Teile | 95 | 95 | 95 |
| Dimethylpolysiloxan | Gew.-Teile | 5 | 5 | 5 |
| Viskosität des Dimethyl-polysiloxans | $\frac{mm^2}{S}$ bei 20°C | 50 000 | 25 000 | 100 000 |
| Schmelzindex[1] (MFI) | g/10 min | 19,5 | 25,4 | 18,2 |
| Reißdehnung[2] | % | 395 | 185 | 300 |
| Vicat-Erweichungstemperatur[3] | °C | 143 | 141 | 140 |
| Bleibende Dehnung[4] | % | 80 | 84 | 82 |

[1]
[2]  } siehe Tabelle 1
[3]
[4]

### Beispiele 5 bis 7 und Vergleichsbeispiel 4

Das in den Beispielen 5 bis 7 und im Vergleichsbeispiel 4 verwendete PE-Copolymerisat hatte einen Gehalt von 7 Gew.-% Ethyleneinheiten und einen Schmelzindex (MFI) von 9,4 g/10 min bei 230°C und 5 kg Belastung. Als Polysiloxan wurde Dimethylpolysiloxan wie in den Beispielen 1 bis 4 eingesetzt. Die Herstellung der Probekörper erfolgte gemäß den Bedingungen der Beispiele 1 bis 4. Die Prüfergebnisse sind der Tabelle 3 zu entnehmen. Auch bei diesem PE-Copolymerisat werden durch Zusatz an Polydimethylsiloxan die elastischen Eigenschaften wie Reißdehnung und bleibende Dehnung wesentlich verbessert.

Tabelle 3

| | Maßeinheit | Beispiel 5 | Beispiel 6 | Beispiel 7 | Vergleichs-beispiel 4 |
|---|---|---|---|---|---|
| PE-Copolymer | Gew.-Teile | 97,5 | 95 | 92,5 | 100 |
| E-Anteil im PE-Copolymer | % | 7 | 7 | 7 | 7 |
| Dimethylpolysiloxan | Gew.-Teile | 2,5 | 5 | 7,5 | 0 |
| Schmelzindex[1] (MFI) | g/10 min | 11,7 | 14,3 | 17,2 | 9,4 |
| Reißdehnung[2] | % | 270 | 395 | 580 | 150 |
| Vicat-Erweichungs-temperatur[3] | °C | 137 | 135 | 129 | 138 |
| Bl. Dehnung[3] | % | 81 | 78 | 75 | 84 |

[1]
[2]  } siehe Tabelle 1
[3]
[4]

5

**Patentansprüche**

1. Homogene, thermoplastische Mischungen aus

A) 85–99,5 Gew.-% Propylen-Ethylen-Copolymerisat mit 0,5–15 Gew.-% copolymerisierten Ethyleneinheiten und mit einem Schmelzindex von 1,0 bis 30 g/10 min bei 230°C und einer Belastung von 5 kg und

B) 0,5–15 Gew.-% flüssigen, gesättigten Diorganopolysiloxanen mit einer Viskosität von 30 000 bis 80 000 $\frac{mm^2}{s}$ bei 20°C.

2. Homogene, thermoplastische Mischung nach Anspruch 1, dadurch gekennzeichnet, daß das Diorganopolysiloxan ein Dialkylpolysiloxan mit 1–4 C-Atomen in der Alkylgruppe darstellt.

3. Homogene, thermoplastische Mischung nach Anspruch 1, dadurch gekennzeichnet, daß das Diorganopolysiloxan ein Dimethylpolysiloxan darstellt.

4. Homogene, thermoplastische Mischung nach Anspruch 1, dadurch gekennzeichnet, daß sie aus 90 bis 99 Gew.-% der Komponente A und 10 bis 1,0 Gew.-% der Komponente B besteht.

5. Homogene, thermoplastische Mischung nach Anspruch 1, dadurch gekennzeichnet, daß das Propylen-Ethylen-Copolymerisat copolymerisierte Einheiten von 1,0 bis 8 Gew.-% Ethylen enthält.

**Claims**

1. Homogeneous thermoplastic mixtures comprising

A) 85–99.5% by weight of a propylene-ethylene copolymer containing 0.5–15% by weight of copolymerised ethylene units and having a melt index of 1.0 to 30 g/10 min at 230°C and under a load of 5 kg and

B) 0.5–15% by weight of liquid saturated diorganopolysiloxanes having a viscosity of 30,000 to 80,000 $\frac{mm^2}{s}$ at 20°C.

2. A homogeneous thermoplastic mixture according to Claim 1, characterised in that the diorganopolysiloxane is a dialkylpolysiloxane having 1–4 C atoms in the alkyl group.

3. A homogeneous thermoplastic mixture according to Claim 1, characterised in that the diorganopolysiloxane is a dimethylpolysiloxane.

4. A homogeneous thermoplastic mixture according to Claim 1, characterised in that it consists of 90 to 99% by weight of component A and 10 to 1.0% by weight of component B.

5. A homogenous thermoplastic mixture according to Claim 1, characterised in that the propylene-ethylene copolymer contains 1.0 to 8% by weight of copolymerised units of ethylene.

**Revendications**

1. Mélanges thermoplastiques homogènes de:

A) 85–99,5% en poids de copolymère propylène-éthylène à 0,5–15% en poids de motifs éthylène copolymérisés et d'un indice de fusion de 1,0 à 30 g/10 min à 230°C et sous une charge de 5 kg et

B) 0,5–15% en poids de diorganopolysiloxannes saturés liquides d'une viscosité de 30 000 à 80 000 $\frac{mm^2}{s}$ à 20°C.

2. Mélange thermoplastique homogène selon la revendication 1, caractérisé en ce que le diorganopolysiloxanne est un di-(alkyl en $C_1–C_4$)polysiloxanne.

3. Mélange thermoplastique homogène selon la revendication 1, caractérisé en ce que le diorganopolysiloxanne est un diméthylpolysiloxanne.

4. Mélange thermoplastique homogène selon la revendication 1, caractérisé en ce qu'il consiste en 90 à 99% en poids du composant A et 10 à 1,0% en poids du composant B.

5. Mélange thermoplastique homogène selon la revendication 1, caractérisé en ce que le copolymère propylène-éthylène contient des motifs copolymérisés de 1,0 à 8% en poids d'éthylène.